# EUROPEAN PATENT APPLICATION

(11) **EP 4 104 951 A1**
(43) Date of publication of application: **21.12.2022**
(21) Application number: 22178407.7
(22) Date of filing: 10.06.2022
(51) Int. Cl.: B22F 3/10, B22F 5/04, B22F 7/06, B22F 7/08, B22F 10/14, B23P 6/00, B33Y 10/00, F01D 5/00, B23K 1/00

(54) **TURBOMACHINE MANUFACTURE AND REPAIR METHOD USING ADDITIVE MANUFACTURED BRAZE PREFORMS**

(30) Priority: 16.06.2021 US 202117304187
(71) Applicant: Honeywell International Inc., Charlotte, NC 28202 (US)
(72) Inventor: HANN, Brian, Charlotte, 28202 (US); BAUGHMAN, Brian, Charlotte, 28202 (US); SUNESON, Marc, Charlotte, 28202 (US)
(74) Representative: LKGlobal UK Ltd.

(57) **Abstract**

Additive manufacturing techniques are used to achieve customized preforms for repair or manufacture of turbomachinery. A method of modifying a section of a product includes forming, a preform set to fit the section. A base material is selected with properties desired for the modification of the section. A binder is selected that vaporizes at a temperature below a melting point of the base material. The preform set is built by the selective application of the binder to the base material to achieve design dimensions of the section when the preform is joined to the section. The section is prepared for effecting the extent of modification and the preform is positioned on the section. The section and the preform are heated to substantially eliminate the binder from the preform and then thermally processed to harden the preform and to bond the preform to the section.

## Description

### TECHNICAL FIELD

The present invention generally relates to the manufacture and repair of turbomachine products, and more particularly relates to creating preforms for use in turbomachine products.

### BACKGROUND

In rotary equipment such as fans, compressors and turbines of turbomachines, field operation may result in degradation of component parts. An existing option to discarding and replacing a worn part with a newly manufactured item, is to repair and recondition the part for reuse. The ability to successfully repair parts is subject to a number of limitations. For example, the geometry of the area of the part requiring repair may be overly complex to undertake conventional repair approaches. Other limitations may arise. For example, such as with increasingly tight tolerances, returning a field run part to original specifications may not be practical.

Various types of articles may be created using additive manufacturing processes. Additive manufacture includes processes such as those that create a component or item by the successive addition of particles, layers or other groupings of a material onto one another. The article is generally built using a computer controlled machine based on a digital representation, and includes processes such as 3-D printing. A variety of different additive manufacturing processes are used for part creation, such as processes that involve powder bed fusion, laser metal deposition, material jetting, or other methods.

It is desirable to repair and reuse turbomachine parts, including those with parts having a complex geometry, by returning the parts to within original specifications in an efficient and effective manner. In addition, it is desirable to apply economical and flexible processing techniques, such as those employing additive manufacturing technologies, where doing so is efficient and effective. Furthermore, other desirable features and characteristics of the present invention will become apparent from the subsequent detailed description of the invention and the appended claims, taken in conjunction with the accompanying drawings and this background of the invention.

### BRIEF SUMMARY

This summary is provided to describe select concepts in a simplified form that are further described in the Detailed Description section hereof. This summary is not intended to identify key or essential features of the claimed subject matter, nor is it intended to be used as an aid in determining the scope of the claimed subject matter.

A number of embodiments include a method of modifying a section of a product. A preform is formed to fit the section. The preform matches preferred dimensions of the section, to achieve an extent of modification of the section required based on the section's determined state. A base material is selected with properties desired for the modification of the section. A binder is selected that vaporizes at a temperature below a melting point of the base material. The preform is built by the selective application of the binder to the base material to achieve design dimensions of the section when the preform is joined to the section. Before or after forming the preform, the section is prepared for effecting the extent of modification. The preform is positioned on the section and the two are heated at the temperature to substantially eliminate the binder from the preform and to maintain the preform below the melting point of the base material. After substantially eliminating the binder from the preform, the section and the preform are thermally processed at an elevated temperature to at least partially melt the base material to harden the preform and to bond the preform to the section.

Other embodiments include a method of modifying a section of a product including forming a preform set to fit the section. The preform set includes one or more preforms that match preferred dimensions of the section, so that when the preform is added to the section the preform achieves an extent of modification of the section required based on a determined state of the section. Forming the preform(s) includes selecting a base material with properties desired for the modification of the section. A binder is selected that vaporizes at a temperature below a melting point of the base material. The preform(s) is/are built by binder jetting additive manufacturing by the selective application of the binder to the base material layer-by-layer to achieve design dimensions of the section when the preform is joined to the section. Before or after forming the preform(s), the section is assessed to ascertain the determined state. Before or after assessing the section, the section is prepared in readiness for effecting the extent of modification. A preform is selected from the preform set to match the extent of modification needed based on the determined state, and is positioned on the section. After positioning the preform on the section, the section and the preform are heated at the temperature to substantially eliminate the binder from the preform and to maintain the preform below the melting point of the base material. After substantially eliminating the binder from the preform, the section and the preform are thermally processed at an elevated temperature to at least partially melt the base material to harden the preform and to bond the preform to the section.

In additional embodiments, a method of modifying a section of a turbomachine product includes forming a preform set to fit the section. The preform set includes one or more preforms that match preferred dimensions of the section so that when a selected preform is added to the section, the preform achieves an extent of modification required based on a determined state of the section. Forming the preform includes selecting a base material with properties desired for the modification of the section and selecting a binder that vaporizes at a temperature below a melting point of the base material. The preform(s) is/are built by binder jetting additive manufacturing by the selective application of the binder to the base material to achieve design dimensions of the section when the preform is joined to the section. The section is assessed to ascertain the determined state. The section is prepared for effecting the extent of modification, including one or more of cleaning, material removal, material addition, material shaping and forming. A preform is selected that matches the extent of modification needed based on the determined state, and the preform is positioned on the section. After positioning the preform on the section, the section and the preform are heated at the temperature to substantially eliminate the binder from the preform and to maintain the preform below a melting point of the base material. After substantially eliminating the binder from the preform, the section and the preform are thermally processed at an elevated temperature to at least partially melt and flow the base material to harden the preform and to bond the preform to the section.

### BRIEF DESCRIPTION OF THE DRAWINGS

The present invention will hereinafter be described in conjunction with the following drawing figures, wherein like numerals denote like elements, and wherein:
FIG. 1 is a schematic illustration of a system in the process of preparing a section of a product for receiving the preform of FIG. 1, according to an exemplary embodiment;
FIG. 2 is a schematic illustration of a rotor blade tip area in longitudinal section, according to an exemplary embodiment;
FIG. 3 a schematic illustration of a system thermally processing a section and printed tapered preform, according to an exemplary embodiment;
FIG. 4 a schematic illustration of a system thermally processing a section and printed wrapped preform, according to an exemplary embodiment;
FIG. 5 a schematic illustration of a system thermally processing a section and printed coating preform, according to an exemplary embodiment;
FIG. 6 a schematic illustration of a system thermally processing a section and printed multi-segment preform, according to an exemplary embodiment; and
FIG. 7 is a flowchart illustrating a process for building the products described herein, in accordance with various embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In the current description, additive manufacturing techniques such as binder jetting may be used to achieve customized preforms for repair and/or for original manufacture of products, such as turbomachinery. In addition, features such as inserts, add-ons, protective layers and others may be created by using an additive manufacturing process such as binder jetting to extend the operational capabilities and/or life of a turbomachine system. The methods and processes disclosed herein may enable the manufacture of complex geometry and/or other performance optimizing characteristics that have been impractical prior to these developments. Repair and manufacturing techniques are disclosed herein to return parts to original specifications and/or to manufacture new parts with features that provide beneficial performance capabilities. Additive manufacturing is herein employed as an enabler for repairing/creating these complex parts, which otherwise may be prohibitively difficult or costly to repair and/or manufacture. In the examples given herein, details may be associated with a specific component and/or machine type, but the disclosure is not limited in application to any specific component or to any particular type of machine, but rather may be applied to any component, machine or assembly where improved repair options or extended performance is desired. In addition, the disclosure is not limited to any specific additive manufacturing technology.

In embodiments of the present disclosure as further described below, structural/geometry repair and methods of manufacturing relate to modifying a section of a product such as a turbomachine or one of its component parts. In general, methods may include creating a preform or a number of preforms to fit the section, where the preform(s) match preferred dimensions of the section to achieve an extent of modification required based on a determined state of the section.

In one embodiment, a preform may be created as needed based on the state of a field-run product and the extent of repair needed. In an additional embodiment, a set of preforms with a range of geometric magnitudes, materials or other varying characteristics may be created in advance to fit a product, and one preform within the set may be selected based on the extent of repair needed. In another embodiment, a preform may be created, such as with a complex geometry or other difficult to manufacture characteristic, for assembly into a new, original manufactured product. As used herein, references to a "set of preforms," may be references to one single preform and/or to any plural number of preforms applicable for the context.

In general, modifying a section of a product may include forming a set of preforms from a base material and a binder, such as by binder jet additive manufacturing. In coordination, the section may be prepared for effecting the extent of modification needed, and an assessment may be made to determine the section's state. A preform is created or selected to match the extent of modification needed based on creating or returning the section to the design state of the product from the determined state of the product. The preform, in green condition, is positioned on the section and then the combination is heated and thermally processed with the preform in-situ on the section. The preform and section are heated at the temperature to substantially eliminate the binder from the preform, while maintaining the preform below the melting point of the base material. After substantially eliminating the binder from the preform, the section and the preform are thermally processed at an elevated temperature to at least partially melt the base material to harden the preform and to bond the preform to the section of the product. Processing the preform in-situ on the section provides efficiency and economy, including by obviating the need for pre-sintering.

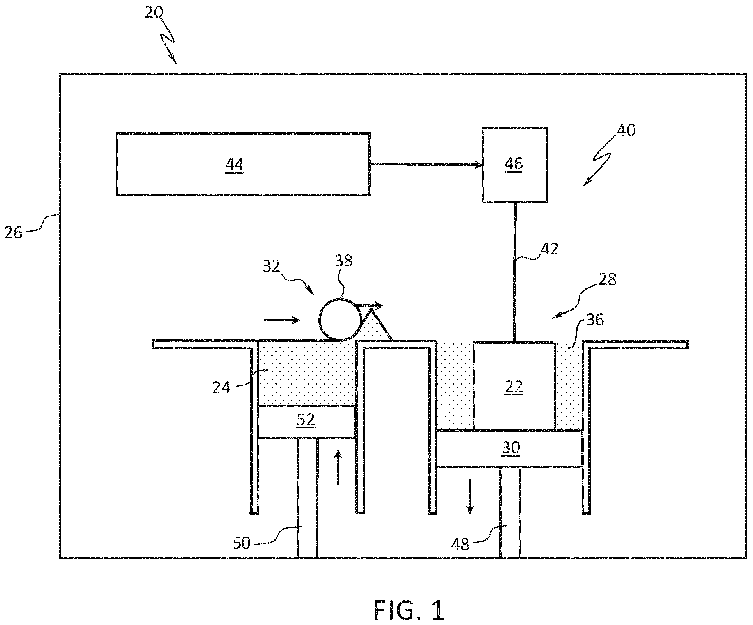

Referring to FIG. 1, illustrated is an example manufacturing system 20, in this case embodied as an additive manufacturing system. In general, additive manufacture includes processes such as those that create a component or item by the successive addition of particles, layers or other groupings of a material onto one another. The article is generally built using a computer controlled machine based on a digital representation, and includes processes such as 3-D printing. A variety of different additive manufacturing processes are available such as processes that involve powder bed fusion, laser metal deposition, material jetting, or other methods. The example additive manufacturing system 20 is carried out without a heat source at or near ambient temperature. An objective is to create a product such as a preform 22 without creating a phase change in, and without flowing, the base material 24. In particular, the application of a heat source such as a laser, electron beam, or other material fusing device is avoided to preserve the homogeneity and other physical aspects of the preform 22 being built. Accordingly, processing without a heat source means operating the manufacturing system 20 without approaching the melting point of any constituent in the base material 24.

More specifically, in many types of additive manufacture, the range of feedstock material is often limited by the ability to weld the material. When applying a heat source, materials commonly used in hot section turbomachine components (combustors, turbines) may experience strain age cracking or solidification cracking. Since binder jetting, for example, does not melt the base material 24, complex shapes may be fabricated without undesirable outcomes that could be observed in additive manufacturing processes that involve fusion of molten material. The base material 24 may be a braze alloy such as a mixture of one or more metal alloys and may include a melting point suppressant, such as boron. Avoiding the use of a heat source to create a structure from a braze alloy type base material 24, avoids outcomes such as keyhole porosity, distortion, and others.

Using the manufacturing system 20 without a heat source such as in binder jetting enables the manufacture of products as braze alloy pre-formed shapes. Creating such products may be used to repair fielded hardware and may be used in creating newly manufactured original equipment hardware. Braze alloys may be used to create products such as the preform 22 and to make repairs such as healing cracks and to repair dents, nicks and erosion, including on airfoils. Braze alloys may be used in the manufacturing system 20 to create preforms 22 to dimensionally restore or build up surfaces, such as to achieve a specific effective flow area in stators and nozzles. The manufacturing system 20 enables the manufacture of intricate details (such as cooling holes) extending the ability to create new products and to repair items such as cooled nozzles without masking cooling holes.

In the embodiment of FIG. 1, the manufacturing system 20 is a binder jetting type system and includes a build chamber box 26 that defines the build chamber as a contained environment for processing. A build area 28 is defined on a build platform 30 where the preform 22 is built. In a number of embodiments, a plural number of preforms 22 may be build in the same build cycle. A material deposition system 32 moves the base material 24 from a reservoir 34 to the build area 28 forming a powder bed 36. The material deposition system 32 generally includes a spreader 38 that applies the base material 24 into the build area 28 on the build platform 30 in individual layers. The spreader 38 may be a roller, scraper or other device that moves and evenly spreads the base material 24. A jetting system 40 is disposed within the build chamber box 26 for selectively applying a binder 42 from a reservoir 44 through a print head 46. Operation of the material deposition system 32 and the jetting system 40 is coordinated, such as by computer control, to selectively deposit the binder 42 to each applied layer of the base material 24 to define the preform 22 by successive build up, one layer at a time. Three-dimensional math data may be employed to build the preform 22 according to design specifications or as individually needed to effect a repair.

The build platform 30 is configured for repositioning at various heights within the build chamber box 26 during a build process. An actuator 48, such as a cylinder, is coupled with the build platform 30 to effect vertical movement. Another actuator 50 is coupled with a piston 52 to move the base material 24 within the reservoir 34 for pickup by the spreader 38. Inside the build chamber box 26, the base material 24 is spread into the build area 28 on the build platform 30 one layer at a time. The print head 46 is selectively directed over individual layers of the deposited base material 24 and applies the binder 42 to areas as necessary to define a segment of the preform 22 from an applied layer. The build platform 30 is then lowered by the depth of one layer. Additional binder 42 is applied to that layer and the process is repeated for successive layers until the preform 22 is completely defined in green form, with the binder 42 adhering the base material 24 together. At this stage, the base material 24 is not fused together and the green preform 22 has a homogenous composition with no heat induced distortion or effects. The binder 42 may be a liquid binding agent and the base material 24 may be a braze alloy in powder form. In some embodiments, a relatively low temperature heat may be applied to accelerate adhesion, but without melting the braze alloy. In green form, the preform 22 may have dimensions that accommodate changes in further processing such as shrinkage due to elimination of the binder 42 or other changes such as due to heating of the base material 24.

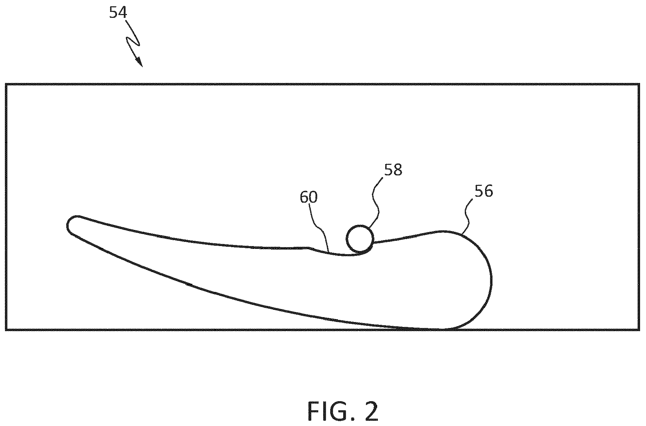

Referring to FIG. 2, preparation of a section 56 of a product for receiving the preform 22 is schematically illustrated. The section 56 may be a component of a product or may be an assembled product. The section 56 may be processed as needed to prepare the section 56 for receiving the preform 22 in green form. Various operations may be undertaken such as cleaning, material removal, material addition or others. For example, cracks may be filled or dimensions may be corrected with added material. In other examples, deposits and corrosion may be removed. The current illustration depicts material removal by a tool 58, such as by grinding material from the section 56. The tool 58 may be computer controlled and, factoring in the state of the section 56, may be programmed to remove material to fit a predefined size of a preform 22 such as from a set of different sized preforms. In other embodiments, material may be removed from the section 56 as individually needed to achieve an extent of modification required based on a determined state of the section 56. After the needed amount of material is removed, the section may be scanned or otherwise measured and a custom preform 22 may be printed to fit the prepared void 60 in the section 56.

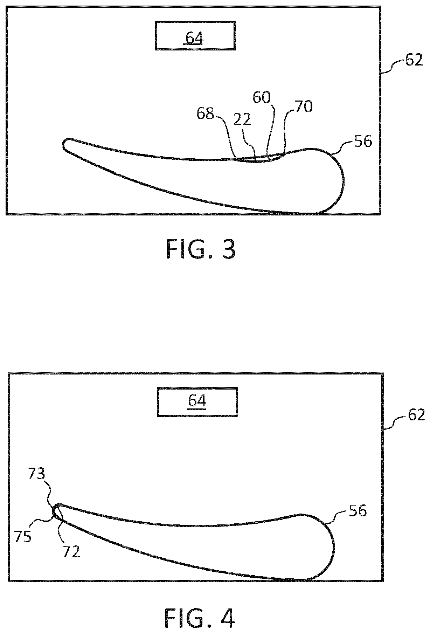

Processing the preform 22 and the section 56 mated together in a heated environment is depicted in FIG. 3. In general, an enclosure 62 contains the section 56 with the preform 22 placed in position in the void 60. A heat source 64 is provided to elevate the temperature in the enclosure 62 to selectively heat the section 56 with the preform 22 in-situ. Initially, the preform 22 remains in green form with the base material in a non-solidified state and the binder in place. In the current embodiment, the preform 22 comprises a part of the section 56, in airfoil form, that is being replaced for reasons such as to correct erosion, cracking, or other deterioration. The enclosure 62 with heat source 64 may be an oven to process products at elevated temperature. In multi-stage processes, plural ovens may be employed, or the same enclosure 62 may be used and operated to achieve different outcomes such as a first stage binder elimination and a second stage brazing/joining. In a number of embodiments, the enclosure 62 may be prepared for the processing by drawing an internal vacuum or by introducing an inert or other gas environment. In this example, the preform 22 comprises a replacement for the material removed from the void 60 and includes ends 68, 70 that taper to zero thickness providing a variable thickness to the preform 22 and a smooth transition between the ends 68, 70 and the section 56 without steps. Additive manufacture facilitates forming the variable thickness preform 22.

Depicted in FIG. 4 is the processing of the section 56 with a preform 72 at elevated temperatures. Similar to the processing of FIG. 3, the section 56 and the preform 72 are mated and placed together in the enclosure 62. The preform 72 comprises a part of the section 56. In this example, the preform 72 is a tightly curved part of the trailing edge 73 of the airfoil shape. The geometry may be customized and/or tuned for specific performance objectives, and a range of tuned preforms may be created from which a particular performance may be selected. In this example, the preform 72 wraps around the trailing edge in its as-printed form. In a number of embodiments, the section 56 may be manufactured with the void 75 in a standard size and a series of plural preforms 72 with different geometries may be printed. One preform 72 from the series may then be selected to achieve a specific performance outcome such as airflow characteristics and joined with the section 56. A similar approach may be used to form nozzles in sections where tuning airflow is desirable.

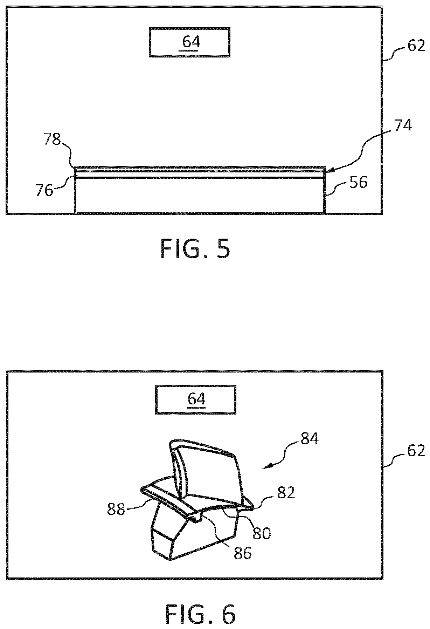

As shown schematically in FIG. 5, the section 56 may be joined with a preform 74 having plural segments 76, 78. The preform 74 with the segments 76, 78 may be printed in the manufacturing system 20 depositing the segments 76 and 78 with different chemical compositions. For example, the segment 76 may be formed from a standard braze alloy and the segment 78 may be printed from a compatible material that provides a protective coating to withstand the environment within which the section 56 will be used. The segments 76, 78 comprise one preform 74 held together by the binder 42. The preform 74 may then be heated and thermally processed in the enclosure 62 to drive out the binder 42 and then to braze the preform 74 and join it to the section 56 as one part.

A thin preform 80 as a protective coating is illustrated schematically in FIG. 6. The preform 80 may be printed in the manufacturing system 20 with a geometry that mates with the section 82 of a turbine blade 84. The section 82, and specifically the surface 86 under the platform 88 is coated to provide desirable corrosion mitigation and/or thermal protection. The surface 86 is curved and complex in shape and the preform 80 is printed to match that shape. Other processing techniques for adding a coating to the surface 86 include spray application, which requires a relatively broad tolerance range because the thickness of the sprayed-on material tends to vary considerably. Printing the preform 80 enables creating the geometry with a substantially more consistent thickness. In addition, printing the preform 80 ensures coverage over the entire surface 86, including around corners. The preform 80 and the section 82 are processed together in the enclosure 62 (or in plural ovens), to drive out the binder 42 and then to braze the preform 80 and join it to the section 82 as one part with the turbine blade 84.

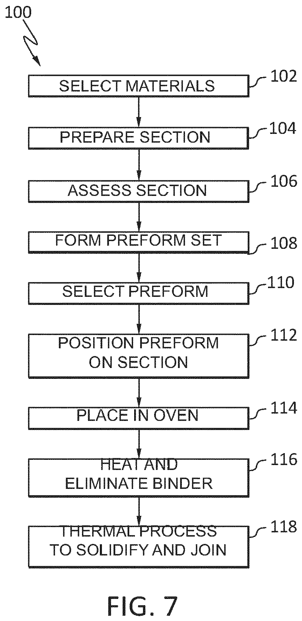

Referring to FIG. 7 along with FIGS. 1-6, a process 100 for manufacture and/or repair of products such as turbomachine components is defined. The process 100 includes forming preforms for joining with a section of a product in the original manufacture, repair, reconditioning and/or tuning of the product. By using additive manufacturing, limitations that may otherwise apply are avoided. For example, adding or repairing features that heretofore were impractical to manufacture or repair may be accomplished. Designs for manufacture, tuning and repair may be created using computer aided design software and evaluated using computational fluid dynamics software tools.

The process 100 includes selecting 102 materials for a set of preforms 22, 72, 74, 80. The selecting 102 may include selecting a base material 24 with properties desired for the modification of the section 56, 82. The "base material," is a material selected for the preform 22, 72, 74, 80, which may be a material that is substantially similar in composition to a material from which the product is made, or a material that provides desirable characteristics to enhance the product. In the case of brazing, the base material 24 may be selected to have a lower melting point than the adjoining metal of the section 56, 82. In an embodiment, a braze alloy such as MARM247 alloy or another alloy may be used. In another embodiment, the base material may be a material that has improved corrosion-resistance, oxidation-resistance, thermal performance, or other desired properties. Other specific material examples may be found in United States Patent 7,824,510 issued November 02, 2010, which is commonly assigned and which is specifically incorporated herein by reference. In a number of embodiments, the set of preforms may be created from different materials having different performance characteristics from which a selection may be made for joining with the section 56, 82 depending on the desired outcomes for the application.

As part of the selecting materials 102, the binder 42 is selected, where the binder 42 vaporizes at a temperature below a melting point of the base material 24. In an embodiment, the temperature may be in the range of 800-900 degrees Celsius. The specific binder 42 material may be a synthetic or natural binding substance, such as a wax based substance, and in practice may be any material that delivers the requisite binding action and that is compatible with the base material 24. The base material 24 and the binder 42 may be provided in a powder, liquid or another form appropriate for delivery. In an embodiment, a liquid binding agent is applied onto a thin deposited layer of powder base material particles to build the preform set 22, 72, 74, 80. Building is accomplished by the selective application of the binder 42 to the base material 24 layer-by-layer, to achieve the design dimensions of the section 56, 82 of the product when a preform is mated with a section and thermally processed. In an embodiment, the proportion of binder 42 to base material 24 in the preform 22, 72, 74, 80 may be approximately ten-percent by-weight of binder 42 or less. Maintaining a relatively low proportion of binder 42 minimizing shrinkage, while providing sufficient adhesion for mating with the section 56, 82 during handling, heating and thermally processing.

The process 100 includes preparation 104 of the section 56, 82 of the product for effecting the extent of modification desired and/or for matching a prefabricated preform 22, 72, 74, 80. Preparation 104 of the section 56, 82 may include one or more of cleaning, material removal, material addition, shaping, forming the section, and/or other operations that prepare the section 56, 82 for receiving a preform 22, 72, 74, 80. In a number of embodiments, the preparation 104 may include original creation of the section with a void to be filled by a preform. When modifying an originally manufactured product, the section 56, 82 is prepared to receive a preform 22, 72, 74, 80 so that the combination results in the intended design state. When repairing a field-run part, the section 56, 82 may be assessed 106 to ascertain its determined state and the extent of modification needed. The determined state is the condition of the product and the assessment includes determining whether the section 56, 82 is repairable, the types of repairs required, and the geometry of any required preforms to accomplish the repair. When a prefabricated set of preforms 22, 72, 74, 80 is available, the assessment includes determining which one of the set will best fit the needed repair.

Forming 108 the preform set 22, 72, 74, 80, may include forming 108 following the assessment 106 to fit the state of modification needed. In other embodiments, forming may include forming 108 in advance to provide a range of alternative preforms 22, 72, 74, 80 in a set so that one may be selected from the set based on the assessment 106. Selecting 110 from the preform set 22, 72, 74, 80 enables matching to the extent of modification needed based on a design state or on a determined state of the section 56, 82.

In a number of embodiments, the steps of preparation 104, assessment 106, forming 108, and selection 110 are carried out in coordination and in any number of orders. For example, the preparation 104 may be carried out to an extent so that when a prefabricated preform 22, 72, 74, 80 is placed in location on the section 56, 82, the end result will return the section 56, 82 to design specifications. In other embodiments, preselecting, such as from a set, which specific preform 22, 72, 74, 80 will be used assists in the determining the extent of preparation 104 needed. For example, material may be removed so that a specific existing preform will fit. In another example, where the preform 22, 72, 74, 80 is tailor made based on the determined extent of modification needed as discerned from the assessment, 106, the preparation 104 may be more limited.

Forming 108 may be carried out using the manufacturing system 20. Three-dimensional math data may be created based on the design of the section 56, 82 or based on the assessment 106. The data may be used to program the manufacturing system 20 to produce the set of preforms 22, 72, 74, 80. The manufacturing system 20 builds the preforms 22, 72, 74, 80 by depositing, via the material deposition system 32 individual layers of the base material 24 in the build area 28. Following the deposition of each layer of the base material 24, the jetting system 40 applies the binder 42 to select areas to define the green preform 22, 72, 74, 80. Employing binder jetting enables dialing in the precise amount of base material 24 needed so that excess removal is minimized following joining with the section 56, 82. When the preform 22, 72, 74, 80 is completely formed and any time for curing is run, excess base material 24 may be vacuumed or otherwise removed from the build area 28 and the preform 22, 72, 74, 80 is also removed. The preform 22, 72, 74, 80 is in a green state at this point with the binder 42 holding the base material 24 together. In some embodiments, the preform 22, 72, 74, 80 may be subjected to relatively low heat to speed curing, without driving the binder 42 out of the base material 24.

Continuing with the process 100, the preform 22, 72, 74, 80, in green condition, is positioned 112 to mate with the section 56, 82. The section 56, 82 and the preform 22, 72, 74, 80 are placed 114 in the enclosure 62. In embodiments, the section is placed 114 in a position so that the preform 22, 72, 74, 80 remains in its intended location. In other embodiments, a fixture, clamp, tape, adhesive, or other mechanism (not shown), may be used to hold the preform 22, 72, 74, 80 and the section 56, 82 together during further processing.

The section 56, 82, with the mating preform 22, 72, 74, 80 in place, is heated 116 by being subjected to an elevated temperature to eliminate the binder 42 from the base material 24, without melting or flowing the base material 24. The temperature may be in the range of 800-900 degrees Celsius, or otherwise depending on the composition of the binder 42 and the flow temperature of the base material 24. Following elimination of the binder 42, the section 56, 82 with mating preform 22, 72, 74, 80 may be transferred to a different heat treatment enclosure or may be thermally processed again in the same enclosure 62.

Following elimination of the binder 42, the preform 22, 72, 74, 80 and section 56, 82 structure is thermally processed 118 to consolidate the preform in a solid form and to join it with the section 56, 82. For example, diffusion bonding, brazing, or any other suitable consolidation/joining process may be used for the materials employed. The thermal processing 118 is conducted at higher temperatures than the heating 116. In an embodiment, the thermal processing 118 may be carried out above 1000 degrees Celsius, such as over 1200 degrees Celsius to flow the base material 24. The joining may include forming a metallurgical bond between the preform 22, 72, 74, 80 and the section 56, 82. Following the thermal processing 118, any post joining processes that are needed for the application may be carried out and the section 56, 82 is ready for use.

Through the embodiments disclosed herein binder jet additive manufacturing technology may be used to manufacture braze alloy preforms. The preforms fabricated by binder jetting expand the ability to repair field-run hardware and enable the manufacture of intricate details that otherwise would be impractical. Employing binder jetting enables dialing in the precise amount of braze alloy needed so that excess removal is minimized following brazing. While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of modifying a section of a product, the method comprising:
forming a preform that matches preferred dimensions of the section, the preform configured to achieve an extent of modification of the section required based on a determined state of the section, the forming including:
selecting a base material with properties desired for the modification of the section;
selecting a binder that vaporizes at a temperature below a melting point of the base material; and
building the preform by the selective application of the binder to the base material to achieve design dimensions of the section when the preform is joined to the section;
preparing the section in preparation for effecting the extent of modification;
positioning the preform on the section;
heating, after positioning the preform on the section, the section and the preform together at the temperature to substantially eliminate the binder from the preform and to maintain the preform below the melting point of the base material;
thermal processing, after substantially eliminating the binder from the preform, the section and the preform together at an elevated temperature to at least partially melt the base material to harden the preform and to bond the preform to the section.

2. The method of claim 1, wherein building the preform comprises building layer-by-layer using additive manufacturing.

3. The method of claim 1, wherein the modifying comprises repairing a field-run section.

4. The method of claim 1, wherein the modifying comprises adding to an original manufactured section.

5. The method of claim 1, wherein the modifying comprises adding a protective layer to the section.

6. The method of claim 1, wherein the thermal processing comprises brazing the preform to fuse the base material together.

7. The method of claim 1, wherein the preform comprises a braze alloy and wherein the thermal processing comprises forming a metallurgical bond between the preform and the section.

8. The method of claim 1, wherein the preform comprises a structure with a variable thickness and a tapered tip configured to join with the section without steps.

9. The method of claim 1, wherein building the preform comprises building layer-by-layer using additive manufacturing, wherein the building layer-by-layer comprises building in segments with at least one of the segments comprising a material that differs from others of the segments.

10. The method of claim 1, wherein the preform comprises a preform set with a series of standard sized preforms for a specific product from which the preform is selected based on the extent of modification needed.
